# EUROPÄISCHE PATENTSCHRIFT

(11) **EP 3 411 575 B1**
(45) Veröffentlichungstag und Bekanntmachung des Hinweises auf die Patenterteilung: **28.02.2024**
(21) Anmeldenummer: 16828915.5
(22) Anmeldetag: 22.12.2016
(51) Int. Cl.: F02D 29/06, H02P 9/04

(54) **GENSET**
STATIONARY ELECTRIC GENERATOR
GENERATEUR ÉLECTRIQUE STATIONNAIRE

(30) Priorität: 29.12.2015 AT 511062015
(43) Veröffentlichungstag der Anmeldung: 12.12.2018
(73) Patentinhaber: Innio Jenbacher GmbH & Co OG, 6200 Jenbach (AT)
(72) Erfinder: SPYRA, Nikolaus, 6020 Innsbruck (AT); VOGL, Lukas, 6212 Maurach (AT); LOPEZ, Francisco, 6020 Innsbruck (AT)
(74) Vertreter: Torggler & Hofmann Patentanwälte - Innsbruck
(86) Internationale Anmeldenummer: PCT/AT2016/060135
(87) Internationale Veröffentlichungsnummer: WO 2017/112971

(56) Entgegenhaltungen:
- EP-A2- 2 860 377
- US-A1- 2015 109 021
- US-A1- 2015 115 616

## Beschreibung

Die Erfindung betrifft ein Genset mit den Merkmalen des Oberbegriffs des Anspruchs 1 und ein Verfahren zum Regeln eines Genset mit den Merkmalen des Oberbegriffs des Anspruchs 8.

Unter Genset versteht man wenigstens eine Anordnung aus einem durch eine Antriebsvorrichtung angetriebenen Generator zur Erzeugung elektrischer Energie.

Dabei wird eine mechanische Leistung von der Antriebsvorrichtung, gegebenenfalls über eine Übertragungseinheit, in den wenigstens einen Generator eingebracht und von diesem in elektrische Leistung umgewandelt. Diese elektrische Leistung wird im Folgenden an das Energieversorgungsnetz abgegeben.

Während eines Netzfehlers in einem Energieversorgungsnetz, insbesondere während eines elektrischen Kurzschlusses in zumindest einer Phase des Energieversorgungsnetzes und dem damit verbundenen Abfall der Netzspannung und Anstieg des Netzstroms im Energieversorgungsnetz, können an einem mit dem Energieversorgungsnetz verbundenen elektrischen Generator, insbesondere Synchrongenerator, unerwünschte Änderungen von Betriebsgrößen des Generators wie beispielsweise der Drehzahl oder des Polradwinkels bzw. Lastwinkels auftreten, denn der Abfall der Netzspannung führt zu einer signifikanten Verringerung der Abgabe von elektrischer Leistung vom Generator an das Energieversorgungsnetz. Bei üblichen Konfigurationen, bei denen ein Rotor des Generators mit einer den Rotor antreibenden Welle einer Antriebsvorrichtung (z.B. einer Verbrennungskraftmaschine) verbunden ist, kann dieser elektrische Leistungsabfall zu einer entsprechenden Drehzahlerhöhung der Antriebsvorrichtung und somit des Rotors führen. Dadurch kann die Synchronisation des Generators mit dem Energieversorgungsnetz verloren gehen oder sogar ein Schaden im Generator hervorgerufen werden.

Der sogenannte Lastwinkel ist der Winkel, unter dem das Polrad einer Synchronmaschine dem Synchrondrehfeld vorauseilt (Generatorbetrieb) bzw. nacheilt (Motorbetrieb).

Der herkömmliche Ansatz, um auf solche Netzfehler zu reagieren, ist es, entsprechende Maßnahmen zu ergreifen, um einer solchen Erhöhung der Drehzahl und einer damit verbundenen Erhöhung des Lastwinkels des Generators entgegenzuwirken. So werden üblicherweise Maßnahmen ergriffen, welche die Drehzahl und den Lastwinkel reduzieren. Eine solche beispielhafte Maßnahme ist die Reduzierung des Beschleunigungsmomentes, indem eine mit dem Generator verbundene Antriebsvorrichtung entsprechend gedrosselt wird.

Solche Verfahren zum Regeln einer Antriebsvorrichtung sind beispielsweise aus der AT 514 811 A1, der US 2015/115616 A1 und der WO 2010/134994 A1 bereits bekannt. Hier wird bei Vorliegen eines Netzfehlers, eine Verbrennungskraftmaschine (welche als Antriebsvorrichtung fungiert) über die Brennstoffzufuhr oder die Zündeinheit gesteuert.

Weitere Verfahren zum Steuern eines Gensets bei Vorliegen eines Netzfehlers sind in der US 2015/109021 A1 und der EP 2860377 A2 offenbart.

Es hat sich jedoch gezeigt, dass die herkömmlichen Maßnahmen bei einem Netzfehler in bestimmten Situationen immer noch mit einer größeren Änderung des Lastwinkels verbunden sind.

Aufgabe der Erfindung ist es, die vorbeschriebenen Nachteile zu vermeiden und ein gegenüber dem Stand der Technik verbesserten Genset und ein verbessertes Verfahren zum Betreiben eines Gensets während eines Netzfehlers (vor allem in der Anfangsphase des Netzfehlers) im Energieversorgungsnetz anzugeben. Daher wäre es wünschenswert bei Auftreten eines Netzfehlers schneller reagieren zu können, um einen zu hohen Zuwachs des Lastwinkels zu vermeiden.

Diese Aufgabe wird durch ein Genset mit den Merkmalen des Anspruchs 1 und ein Verfahren zum Regeln eines Gensets mit den Merkmalen des Anspruchs 8 gelöst. Vorteilhafte Ausführungsformen der Erfindung sind in den abhängigen Ansprüchen definiert.

Das erfindungsgemäße Genset weist wenigstens auf:
- eine Detektionsvorrichtung zur Detektion des Vorliegens eines Netzfehlers in wenigstens einer Phase eines Energieversorgungsnetzes,
- eine Vorrichtung zur Bestimmung eines Betriebszustandes des Generators unmittelbar vor oder bei Detektion eines Netzfehlers und
- eine Regeleinrichtung, welcher die Signale der Detektionsvorrichtung und der Vorrichtung zur Bestimmung des Betriebszustandes zuführbar sind.

Die Regeleinrichtung ist dazu ausgebildet, nach Detektion eines Netzfehlers eine Leistung der Antriebsvorrichtung in Abhängigkeit eines von der Vorrichtung zur Bestimmung des Betriebszustands bestimmten Betriebszustandes des Generators, welcher unmittelbar vor oder bei Detektion des Netzfehlers vorlag, zu regeln. Dies dient einer besseren und schnelleren Reaktion bei einem Netzfehler zur Regelung der Antriebsvorrichtung, weil sich der Lastwinkel besser kontrollieren lässt und sich eine anfallende Abweichung möglichst klein halten lässt. Ein Netzfehler kann so besser "durchfahren" (LVRT- Low Voltage Ride Through) werden.

Ein solches Genset kann eine Detektionsvorrichtung, welche eine Messeinrichtung zum Messen wenigstens einer Netzspannung und/oder eines Netzstromes wenigstens einer Phase eines mit dem Genset verbundenen Stromnetzes umfasst, aufweisen. Die Detektionsvorrichtung detektiert in diesem Fall das Vorliegen eines Netzfehlers bei Messung einer Unterspannung und/oder eines Überstroms in der wenigstens einen Phase des Energieversorgungsnetzes. Diese Unterspannung und dieser Überstrom bezieht sich auf Schwellwerte, die durch Versuche, Messungen und Erfahrungswerte oder physikalische Modelle bestimmt werden können.

Bevorzugt kann vorgesehen sein, dass die Vorrichtung zur Bestimmung eines Betriebszustandes des Generators:
- als Messeinrichtung zur Messung der Spannung und/oder des Stroms des Generators und/oder
- als Messeinrichtung zur Messung der Leistung des Generators und/oder
- als Messeinrichtung zur Messung des Leistungsfaktors des Generators ausgeführt ist.

Bevorzugt kann vorgesehen sein, dass die Regeleinrichtung bei Erreichen oder Passieren vorgegebener Schwellwerte für
- die Leistung des Generators,
- die Spannung und/oder den Strom des Energieversorgungsnetzes und
- des Leistungsfaktors
die Leistung der Antriebsvorrichtung verringert. Solche Schwellwerte können durch Erfahrungswerte, Messungen oder auch physikalische Modelle bestimmt werden.

Es ist bekannt, dass die Leistung des Generators und die Spannungen des Energieversorgungsnetzes bei Vorliegen eines Netzfehlers sinken und die Stromstärke steigt. Um ein charakteristisches Signal für den Ausgangslastwinkel zu erhalten sind wenigstens zwei der oben genannten Messgrößen erforderlich.

Bevorzugt kann vorgesehen sein, dass die Regeleinrichtung dazu ausgebildet ist, die Verringerung der Leistung der Antriebsvorrichtung durch ein zumindest teilweises Abschalten oder Retardieren einer Zündvorrichtung wenigstens eines Brennraums der Antriebsvorrichtung und/oder ein Deaktivieren oder Verringern einer Kraftstoffzufuhr wenigstens eines Brennraums der Antriebsvorrichtung vorzunehmen. Das Abschalten oder Retardieren der Zündvorrichtung kann für einzelne, mehrere oder alle Brennräume erfolgen. Für Hubkolbenmotoren ist diese Technik als "ignition skipping" bekannt. Das Verringern oder Deaktivieren der Kraftstoffzufuhr kann für einzelne, mehrere oder alle Brennräume erfolgen.

Gemäß der Erfindung ist es vorgesehen, dass die Regeleinrichtung dazu ausgebildet ist, die Verringerung der Leistung der Antriebsvorrichtung für eine vorbestimmte Zeitspanne vorzunehmen. Dabei ist es vorgesehen, dass die Regeleinrichtung dazu ausgebildet ist, die vorbestimmte Zeitspanne, für welche die Verringerung der Leistung der Antriebsvorrichtung vorgenommen wird, in Abhängigkeit des Betriebszustandes des Generators unmittelbar vor oder bei Detektion des Netzfehlers und/oder der Konfiguration des Gensets vorzunehmen. Je weiter die zuletzt gemessenen Werte bzgl. des Betriebszustandes des Generators und/oder der Konfiguration des Gensets unmittelbar vor oder bei Detektion des Netzfehlers von vorgegebenen Schwellwerten abweichen, desto länger wird die vorbestimmte Zeitspanne gewählt. Die Regeleinrichtung beinhaltet zu diesem Zweck eine Lookup-Table, welcher vorbestimmte Zeitspannen für verschiedene mögliche Betriebszustände des Generators und/oder Konfigurationen des Gensets unmittelbar vor oder bei Detektion des Netzfehlers aufweist. Eine Lookup-Table könnte z. B. wie folgt aussehen:

| | | | | |
|---|---|---|---|---|
| Trägheitsmoment des Gensets | Num | Num | Num | Num |
| Anzahl der Pole des Generators | Num | Num | Num | Num |
| Bauform des Generators (z. B. Vollpol oder Schenkelpol) | V/S | V/S | V/S | V/S |
| Nominelle Leistung des Gensets | Num | Num | Num | Num |
| Nominelle Spannung des Gensets | Num | Num | Num | Num |
| Spannung des Energieversorgungsnetzes unmittelbar vor oder bei Netzfehler | Num | Num | Num | Num |
| Leistung des Generators unmittelbar vor oder bei Netzfehler | Num | Num | Num | Num |
| Leistungsfaktor des Generators unmittelbar vor oder bei Netzfehler | Num | Num | Num | Num |
| sich ergebende vorbestimmte Zeitspanne | Num | Num | Num | Num |

Die mit "Num" (Abkürzung für "nummerischer Wert") und "V/S" (Abkürzung für "Vollpol" oder "Schlupfpol") bezeichneten Werte beziehen sich einerseits auf die Konfiguration des Gensets und andererseits auf die unmittelbar vor oder bei Auftreten des Netzfehlers gemessenen Werte. Jeweils ergibt sich eine gewisse vorbestimmte Zeitspanne.

Die vorbestimmten Zeitspannen können sich z. B. in einem Bereich von 20 Millisekunden bis 60 Millisekunden bewegen.

Nach Ablauf der vorbestimmten Zeitspanne kann eine erneute Abfrage der Messwerte der Detektionsvorrichtung und/oder eine Bestimmung des Betriebszustandes der Antriebsvorrichtung erfolgen, welche Auslöser für eine Verringerung der Leistung der Antriebsvorrichtung waren, um über ein weiteres Vorgehen zu entscheiden. Liegen immer noch die Kriterien vor, welche eine Verringerung der Leistung der Antriebsvorrichtung ausgelöst haben, kann die Verringerung der Leistung beibehalten oder gegebenenfalls intensiviert werden. Liegen diese Auslöser nicht mehr oder nur noch in einem abgeschwächten Zustand vor, kann die Regeleinrichtung mit einer entsprechenden Änderung darauf reagieren. Je nach gesetzlicher Vorschrift kann es auch zu einem Trennen des Genset vom Energieversorgernetz kommen, falls der Netzfehler zu lange dauert.

Bevorzugt kann vorgesehen sein, dass eine Vorrichtung zur Berechnung eines momentanen Lastwinkels des Generators vorgesehen ist, deren Signale der Regeleinrichtung zuführbar sind, wobei die Regeleinrichtung bei Erreichen oder Überschreiten eines vorgegebenen Schwellwertes für den Lastwinkel die Maßnahmen zur Verringerung der Leistung der Antriebsvorrichtung beizubehalten und bei Unterschreiten des vorgegebenen Schwellwertes die Maßnahmen zur Verringerung der Leistung der Antriebsvorrichtung zu beenden. In diesem Fall verringert die Regeleinrichtung, in Abhängigkeit des von der Vorrichtung zur Bestimmung des Betriebszustands bestimmten Betriebszustandes des Generators die Leistung der Antriebsvorrichtung so, dass der Lastwinkel keine zu große Abweichung erfährt.

Bevorzugt kann vorgesehen sein, dass die Antriebsvorrichtung als - vorzugsweise stationäre - Verbrennungskraftmaschine, vorzugsweise als Hubkolbenmotor oder Gasturbine ausgeführt ist. Ein Hubkolbenmotor kann als Gasmotor oder Dual-Fuel-Verbrennungskraftmaschine ausgebildet sein.

Verschiedene Ausführungsformen der Erfindung sind in den folgenden Figuren gezeigt. Dabei zeigt:
- Fig. 1: ein schematisches Blockschaltbild eines mit einem Energieversorgungsnetz elektrisch verbundenen Generators, der von einer Antriebsvorrichtung angetrieben wird und
- Fig. 2a, 2b: Blockdiagramme für eine mögliche Regelstrecke einer Low Voltage Ride Through (kurz LVRT) Regelung.

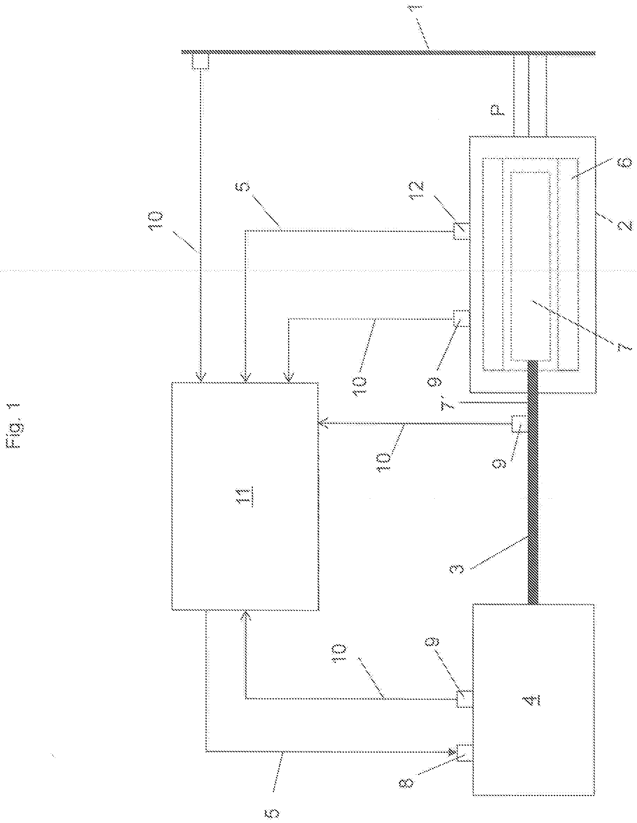

Fig. 1 zeigt in einem schematischen Blockschaltbild einen elektrischen Generator 2, der mit einem dreiphasig ausgebildeten Energieversorgungsnetz 1 elektrisch verbunden ist. Der Generator 2 ist hier als Synchrongenerator ausgebildet und weist einen Stator 6 und einen innerhalb des Stators 6 drehbar angeordneten Rotor 7 auf. Die drei Phasen des Energieversorgungsnetzes 1 sind in bekannter Art und Weise mit Wicklungen am Stator 6 des Generators 2 verbunden. Beim Energieversorgungsnetz 1 kann es sich um ein öffentliches Energieversorgungsnetz handeln, das die Netzfrequenz vorgibt, oder beispielsweise um ein lokales Energieversorgungsnetz im Inselbetrieb, bei dem die Netzfrequenz vom Generator 2 vorgegeben wird. Der Rotor 7 bzw. Läufer des Generators 2 ist über eine Übertragungseinheit 3 (wie aus dem Stand der Technik bekannt, kann dies Beispielsweise als eine Motorwelle, eine Kupplung oder eine Rotorwelle 7' ausgeführt sein) mit einer hier als Verbrennungskraftmaschine 4 ausgebildeten Antriebsvorrichtung verbunden. Bei der Verbrennungskraftmaschine 4 kann es sich zum Beispiel um einen stationären Gasmotor handeln, der als fremdgezündete, ottomotorisch betriebene Hubkolbenmaschine ausgebildet sein kann.

Eine von der Verbrennungskraftmaschine 4 abgegebene mechanische Leistung Pmech wird über die Übertragungseinheit 3 in den Generator 2 eingebracht, im Generator 2 in (elektrische) Leistung P umgewandelt, und in weiterer Folge wird die elektrische Leistung P an das Energieversorgungsnetz 1 abgegeben.

Im gezeigten Beispiel sind verschiedene Messwerte über Sensoren 9 einer Regeleinrichtung 11 mittels Signalleitungen 10 zuführbar. Diese Messwerte können beispielsweise die Spannung U oder der Strom I des Energieversorgernetzes 1 sein, durch welche die Detektionsvorrichtung (welche in diesem Ausführungsbeispiel mit der Regeleinrichtung 11 kombiniert ist) einen Netzfehler detektieren kann. Des Weiteren können solche gemessene Messgrößen vom Generator 2, der Antriebsvorrichtung oder der Übertragungseinheit 3 stammen, um mit Hilfe der Vorrichtung zur Bestimmung eines Betriebszustandes (welche in diesem konkreten Beispiel ebenfalls mit der Regeleinrichtung 11 kombiniert ist) einen momentanen Betriebszustand zu bestimmen. Hierbei kann die Regeleinrichtung 11 so ausgebildet sein, dass sie mit den vorliegenden Messgrößen einen Leistungsfaktor ermitteln kann.

Des Weiteren ist die Regeleinrichtung 11 über Motorsteuerleitungen 5 mit einer Aktuatoreinheit 8 verbunden, welche an der Verbrennungskraftmaschine 4 sitzt. Diese Aktuatoreinheit 8 kann die Leistung der Verbrennungskraftmaschine 4 regeln. Eine solche Regelung kann beispielsweise über die Regelung der Zündung und/oder die Regelung der zugeführten Brennstoffmenge erfolgen. Die Regeleinrichtung 11 ist über Motorsteuerleitungen 5 ebenfalls mit einer Aktuatoreinheit 12 verbunden. Diese Aktuatoreinheit 12 sitzt am Generator 2 und kann beispielsweise so ausgeführt sein, dass sie in der Lage ist, den Generator 2 vom Energieversorgernetz 1 zu trennen, falls dies erforderlich und/oder gesetzlich erlaubt ist.

Insbesondere kann es sich bei der Verbrennungskraftmaschine 4 um einen luftaufgeladenen Gasmotor handeln.

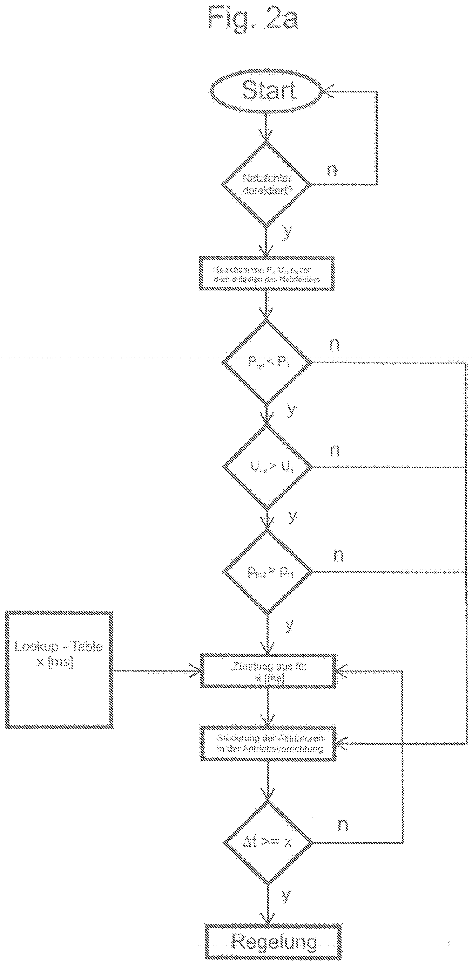

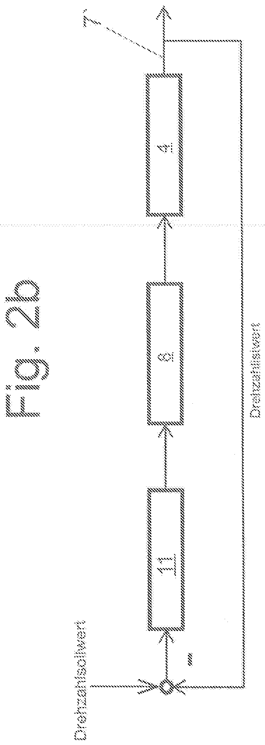

Fig. 2 zeigt ein Blockdiagramm für eine mögliche Regelstrecke einer Low Voltage Ride Through (kurz LVRT) Regelung. Diese Regelung startet mit einer Netzbeobachtung mittels einer Detektionsvorrichtung, welche eine ständige Messung der Spannung U des Energieversorgungsnetzes 1 vornimmt und bei Erkennen einer Unterspannung auf einen Netzfehler schließt. Wird ein solcher Netzfehler detektiert, kommt es zu einem Speichern einer Leistung P₁ des Generators 2, einer Spannung U₁ des Energieversorgungsnetzes 1 und eines Leistungsfaktors p_{f1}, welche noch kurz vor oder bei dem Auftreten des Netzfehlers gemessen wurden. Überschreiten oder unterschreiten diese zuletzt aufgetretenen Werte die vorgegebenen Schwellwerte P_{ref}, U_{ref}, p_{fref}, also P_{ref} < P₁, U_{ref} > U₁, p_{fref} > p_{f1}, wird mit diesen zuletzt aufgetretenen Werten in einer Regeleinrichtung 11, mittels einer vordefinierten Tabelle (Lookup Table) über eine vorbestimmte Zeitspanne Δt entschieden und über eine entsprechende Ansteuerung der Aktuatoren in der Antriebsvorrichtung die Leistung für diese vorbestimmte Zeitspanne Δt verringert, z. B. die Zündung für diese Zeitspanne Δt ausgeschalten. Das Verringern der Leistung kann je nach Netzfehler für die gesamte Antriebseinheit erfolgen oder nur für einzelne Brennräume.

Überschreiten oder unterschreiten diese zuletzt aufgetretenen Werte nicht die Schwellwerte, also P_{ref} > P₁, U_{ref} < U₁, p_{fref} < p_{f1} kommt es direkt zu einer Regelung der Aktuatoren in der Antriebsvorrichtung für eine Zeitspanne Δt. Auch die Dauer dieser Zeitspanne Δt ist, insofern als sie durch das Ausmaß der Abweichung von den zuletzt aufgetreten Werten zu den Schwellwerten bestimmt werden kann (es kann sich um die vorher diskutierte Zeitspanne Δt handeln). Nach Ablauf dieser Zeitspanne Δt wird fortgefahren mit einem Regelkreislauf wie er aus dem Stand der Technik bekannt ist, bis die Spannung U des Energieversorgungsnetzes 1 wieder einen vorgegebenen Wert erreicht hat.

Dabei wird z. B. (vgl. Fig. 2b) der momentane Drehzahlwert gemessen und durch die Regeleinrichtung 11 mit einem vorgegebenen gewünschten Drehzahlwert (beispielsweise 1500 U/min) des Rotors 7 oder der Rotorwelle 7' verglichen. Durch die berechnete Abweichung (Drehzahldeltawert) der momentanen Drehzahl zur gewünschten Drehzahl wird durch die Regeleinrichtung 11 ein Steuer-/Regelsignal für die entsprechende Steuerung/Regelung der Leistung der Antriebseinheit mittels der Aktuatoreinheit 12, z. B. über das Zündsystem, erzeugt. Je nach Drehzahlabweichung ergibt sich dadurch z. B. ein Ignition on/off ("Zündung ein/aus"). Diese Schleife kann so lange wiederholt werden, bis die Antriebseinheit die gewünschte Drehzahl für den stabilen Normalbetrieb wieder erreicht hat und der Regelzyklus für die Low Voltage Ride Through (kurz LVRT) Regelung endet.

Dauert der Spannungseinbruch zu lange (z. B. in einem Bereich von 100 Millisekunden bis 300 Millisekunden) und ist der Spannungseinbruch zu groß (z. B. verbleibende Restspannung nur mehr zwischen 0 % und 30 % der Spannung im Normalbetrieb des Energieversorgungsnetzes), kann auch eine Trennung des Gensets vom Energieversorgungsnetzes erfolgen.

## Patentansprüche

1. Genset mit wenigstens einem durch eine Antriebsvorrichtung antreibbaren Generator (2) zur Erzeugung elektrischer Energie, mit:
- einer Detektionsvorrichtung zur Detektion des Vorliegens eines Netzfehlers in wenigstens einer Phase eines Energieversorgungsnetzes (1),
- einer Vorrichtung zur Bestimmung eines Betriebszustandes des Generators (2) unmittelbar vor oder bei Detektion eines Netzfehlers und
- einer Regeleinrichtung (11), welcher die Signale der Detektionsvorrichtung und der Vorrichtung zur Bestimmung des Betriebszustandes zuführbar sind,
**dadurch gekennzeichnet, dass** die Regeleinrichtung (11) dazu ausgebildet ist, nach Detektion eines Netzfehlers eine Leistung der Antriebsvorrichtung in Abhängigkeit jenes Betriebszustandes des Generators (2) zu regeln, welcher unmittelbar vor oder bei Detektion des Netzfehlers bestimmt wurde, wobei
- die Regeleinrichtung (11) dazu ausgebildet ist, eine Verringerung der Leistung der Antriebsvorrichtung für eine vorbestimmte Zeitspanne (Δt) vorzunehmen,
- die Regeleinrichtung (11) dazu ausgebildet ist, die vorbestimmte Zeitspanne (Δt), für welche die Verringerung der Leistung der Antriebsvorrichtung vorgenommen wird, in Abhängigkeit des Betriebszustandes des Generators (2) und/oder der Konfiguration des Gensets unmittelbar vor oder bei Detektion des Netzfehlers auszuwählen,
- die Regeleinrichtung (11) dazu ausgebildet ist, je weiter zuletzt gemessene Werte bezüglich des Betriebszustands des Generators und/oder der Konfiguration des Generators vor oder bei Detektion des Netzfehlers von vorgegebenen Sollwerten abweichen, eine desto längere Zeitspanne auszuwählen, und
- die Regeleinrichtung eine Lookup-Table beinhaltet, welche die vorbestimmten Zeitspannen für verschiedene mögliche Betriebszustände des Generators und/oder Konfigurationen des Gensets unmittelbar vor oder bei Detektion des Netzfehlers aufweist.

2. Genset nach Anspruch 1, wobei die Detektionsvorrichtung eine Messeinrichtung zum Messen wenigstens einer Netzspannung und/oder eines Netzstromes wenigstens einer Phase eines mit dem Genset verbundenen Energieversorgungsnetzes (1) aufweist, wobei die Detektionsvorrichtung das Vorliegen eines Netzfehlers bei Messung einer Unterspannung und/oder eines Überstroms in der wenigstens einen Phase des Energieversorgungsnetzes (1) meldet.

3. Genset nach Anspruch 1 oder 2, wobei die Vorrichtung zur Bestimmung eines Betriebszustandes des Generators (2)
- eine Messeinrichtung zur Messung der Spannung und/oder des Stroms des Generators und/oder
- eine Messeinrichtung zur Messung einer Leistung (P) des Generators (2) und/oder
- eine Messeinrichtung zur Messung eines Leistungsfaktors (p_{f}) des Generators (2)
aufweist.

4. Genset nach Anspruch 3, wobei die Regeleinrichtung (11) bei Erreichen oder Passieren vorgegebener Schwellwerte für
- die Leistung des Generators (2) und
- die Spannung (U) und/oder den Strom (I) des Energieversorgungsnetzes (1) und
- des Leistungsfaktors (p_{f})
die Leistung der Antriebsvorrichtung verringert.

5. Genset nach wenigstens einem der vorangehenden Ansprüche, wobei die Regeleinrichtung (11) dazu ausgebildet ist, die Verringerung der Leistung der Antriebsvorrichtung durch
- ein zumindest teilweises Abschalten oder Retardieren einer Zündvorrichtung wenigstens eines Brennraumes und/oder
- ein Deaktivieren oder Verringern einer Kraftstoffzufuhr wenigstens eines Brennraums der Antriebsvorrichtung
vorzunehmen.

6. Genset nach wenigstens einem der vorangehenden Ansprüche, wobei eine Vorrichtung zur Berechnung eines momentanen Lastwinkels des Generators (2) vorgesehen ist, deren Signale der Regeleinrichtung (11) zuführbar sind, wobei die Regeleinrichtung (11) dazu ausgebildet ist, bei Erreichen oder Überschreiten eines vorgegebenen Schwellwertes für den Lastwinkel die Maßnahmen zur Verringerung der Leistung der Antriebsvorrichtung beizubehalten oder zu verstärken und bei Unterschreiten des vorgegebenen Schwellwertes die Maßnahmen zur Verringerung der Leistung der Antriebsvorrichtung zu beenden oder zu verringern.

7. Genset nach wenigstens einem der vorangehenden Ansprüche, wobei die Antriebsvorrichtung als Verbrennungskraftmaschine (4), vorzugsweise als Hubkolbenmotor oder Gasturbine, ausgeführt ist.

8. Verfahren zum Regeln eines Genset, wobei das Genset wenigstens einen durch eine Antriebsvorrichtung antreibbaren Generator (2) zur Erzeugung elektrischer Energie aufweist, umfassend die Schritte:
- Detektion des Vorliegens eines Netzfehlers in wenigstens einer Phase eines Energieversorgungsnetzes (1)
- Bestimmung eines Betriebszustandes des Generators (2) unmittelbar vor oder bei Detektion eines Netzfehlers
**dadurch gekennzeichnet, dass**
- bei Detektion oder Vorliegen eines Netzfehlers eine Leistung der Antriebsvorrichtung in Abhängigkeit jenes Betriebszustandes des Generators (2) geregelt wird, welcher unmittelbar vor oder bei Detektion eines Netzfehlers vorliegt,
- eine Verringerung der Leistung der Antriebsvorrichtung für eine vorbestimmte Zeitspanne (Δt) vorgenommen wird,
- die vorbestimmte Zeitspanne (Δt), für welche die Verringerung der Leistung der Antriebsvorrichtung vorgenommen wird, in Abhängigkeit des Betriebszustandes des Generators (2) und/oder der Konfiguration des Gensets unmittelbar vor oder bei Detektion des Netzfehlers ausgewählt wird,
- je weiter zuletzt gemessene Werte bezüglich des Betriebszustands des Generators und/oder der Konfiguration des Generators vor oder bei Detektion des Netzfehlers von vorgegebenen Sollwerten abweichen, eine desto längere Zeitspanne auszuwählen, und
- eine Lookup-Table verwendet wird, welche die vorbestimmten Zeitspannen für verschiedene mögliche Betriebszustände des Generators und/oder Konfigurationen des Gensets unmittelbar vor oder bei Detektion des Netzfehlers aufweist.

## Claims

1. Genset having at least one generator (2) for generating electrical energy, which can be driven by a drive device, with:
- a detection device for detecting the presence of a grid fault in at least one phase of a power grid (1),
- a device for determining an operating state of the generator (2) immediately before or upon detection of a grid fault and
- a regulating device (11), to which the signals of the detection device and of the device for determining the operating state can be fed,
**characterized in that** the regulating device (11) is formed, after detection of a grid fault, to regulate a power of the drive device in dependence on the operating state of the generator (2) which was determined immediately before or upon detection of the grid fault, wherein
- the regulating device (11) is formed to carry out a reduction of the power of the drive device for a predetermined time period (Δt),
- the regulating device (11) is formed to select the predetermined time period (Δt), for which the reduction of the power of the drive device is carried out, in dependence on the operating state of the generator (2) and/or the configuration of the genset immediately before or upon detection of the grid fault,
- the regulating device (11) is formed to select a longer time period, the further last-measured values with respect to the operating state of the generator and/or the configuration of the generator before or upon detection of the grid fault deviate from predefined target values, and
- the regulating device comprises a lookup table which contains the predetermined time periods for various possible operating states of the generator and/or configurations of the genset immediately before or upon detection of the grid fault.

2. Genset according to claim 1, wherein the detection device has a measuring device for measuring at least one grid voltage and/or one grid current of at least one phase of a power grid (1) connected to the genset, wherein the detection device reports the presence of a grid fault when an undervoltage and/or an overcurrent is measured in the at least one phase of the power grid (1).

3. Genset according to claim 1 or 2, wherein the device for determining an operating state of the generator (2) has
- a measuring device for measuring the voltage and/or the current of the generator and/or
- a measuring device for measuring a power (2) of the generator (2) and/or
- a measuring device for measuring a power factor (p_{f}) of the generator (2).

4. Genset according to claim 3, wherein the regulating device (11) reduces the power of the drive device when predefined threshold values for
- the power of the generator (2) and
- the voltage (U) and/or the current (I) of the power grid (1) and
- the power factor (p_{f})
are reached or passed.

5. Genset according to at least one of the preceding claims, wherein the regulating device (11) is formed to carry out the reduction of the power of the drive device by
- at least partially switching off or retarding an ignition device of at least one combustion chamber and/or
- deactivating or reducing a fuel supply of at least one combustion chamber of the drive device.

6. Genset according to at least one of the preceding claims, wherein a device for calculating a current load angle of the generator (2) is provided, the signals of which can be fed to the regulating device (11), wherein the regulating device (11) is formed to maintain or reinforce the measures for reducing the power of the drive device when a predefined threshold value for the load angle is reached or exceeded and to stop or reduce the measures for reducing the power of the drive device when the predefined threshold value is fallen below.

7. Genset according to at least one of the preceding claims, wherein the drive device is designed as an internal combustion engine (4), preferably as a piston engine or gas turbine.

8. Method for regulating a genset, wherein the genset has at least one generator (2) for generating electrical energy, which can be driven by a drive device, comprising the steps of:
- detecting the presence of a grid fault in at least one phase of a power grid (1)
- determining an operating state of the generator (2) immediately before or upon detection of a grid fault
**characterized in that**
- when a grid fault is detected or present, a power of the drive device is regulated in dependence on the operating state of the generator (2) which is present immediately before or upon detection of a grid fault,
- a reduction of the power of the drive device is carried out for a predetermined time period (Δt),
- the predetermined time period (Δt), for which the reduction of the power of the drive device is carried out, is selected in dependence on the operating state of the generator (2) and/or the configuration of the genset immediately before or upon detection of the grid fault,
- to select a longer time period, the further last-measured values with respect to the operating state of the generator and/or the configuration of the generator before or upon detection of the grid fault deviate from predefined target values, and
- a lookup table is used, which contains the predetermined time periods for various possible operating states of the generator and/or configurations of the genset immediately before or upon detection of the grid fault.

## Revendications

1. Groupe électrogène avec au moins un générateur (2) entraînable par un dispositif d'entraînement pour la génération d'énergie électrique, avec :
- un dispositif de détection pour la détection de la présence d'une panne de réseau dans au moins une phase d'un réseau d'alimentation en énergie (1),
- un dispositif de détermination d'un état de fonctionnement du générateur (2) juste avant ou lors de la détection d'une panne de réseau et
- un dispositif de régulation (11), auquel peuvent être fournis les signaux du dispositif de détection et du dispositif de détermination de l'état de fonctionnement, **caractérisé en ce que** le dispositif de régulation (11) est réalisé afin de réguler après la détection d'une panne de réseau une puissance du dispositif d'entraînement en fonction de l'état de fonctionnement du générateur (2) qui a été déterminé juste avant ou lors de la détection de la panne de réseau, dans lequel
- le dispositif de régulation (11) est réalisé afin d'entreprendre une diminution de la puissance du dispositif d'entraînement pour un intervalle prédéterminé (Δt),
- le dispositif de régulation (11) est réalisé afin de sélectionner l'intervalle prédéterminé (Δt), pour lequel la diminution de la puissance du dispositif d'entraînement est entraînée, en fonction de l'état de fonctionnement du générateur (2) et/ou de la configuration du groupe électrogène juste avant ou lors de la détection de la panne de réseau,
- le dispositif de régulation (11) est réalisé afin de sélectionner un intervalle d'autant plus long que plus de valeurs mesurées en dernier relatives à l'état de fonctionnement du générateur et/ou à la configuration du générateur avant ou lors de la détection de la panne de réseau divergent de valeurs de consigne prédéfinies, et
- le dispositif de régulation contient une table à consulter qui présente les intervalles prédéterminés pour différents états de fonctionnement possibles du générateur et/ou configurations du groupe électrogène juste avant ou lors de la détection de la panne de réseau.

2. Groupe électrogène selon la revendication 1, dans lequel le dispositif de détection présente un dispositif de mesure pour la mesure au moins d'une tension de réseau et/ou d'un courant de réseau au moins d'une phase d'un réseau d'alimentation en énergie (1) relié au groupe électrogène, dans lequel le dispositif de détection signale la présence d'une panne de réseau lors de la mesure d'une sous-tension et/ou d'un courant de surcharge dans l'au moins une phase du réseau d'alimentation en énergie (1).

3. Groupe électrogène selon la revendication 1 ou 2, dans lequel le dispositif de détermination d'un état de fonctionnement du générateur (2) présente
- un dispositif de mesure pour la mesure de la tension et/ou du courant du générateur et/ou
- un dispositif de mesure pour la mesure d'une puissance (P) du générateur (2) et/ou
- un dispositif de mesure pour la mesure d'un facteur de puissance (p_{f}) du générateur (2).

4. Groupe électrogène selon la revendication 3, dans lequel le dispositif de régulation (11) diminue lors de l'atteinte ou du passage de valeurs seuils prédéfinies pour
- la puissance du générateur (2) et
- la tension (U) et/ou le courant (I) du réseau d'alimentation en énergie (1) et
- du facteur de puissance (p_{f})
la puissance du dispositif d'entraînement.

5. Groupe électrogène selon au moins l'une quelconque des revendications précédentes, dans lequel le dispositif de régulation (11) est réalisé afin d'entreprendre la diminution de la puissance du dispositif d'entraînement par
- un arrêt ou retard au moins partiel d'un dispositif d'allumage d'au moins un espace de combustion et/ou
- une désactivation ou diminution d'un apport de carburant au moins d'un espace de combustion du dispositif d'entraînement.

6. Groupe électrogène selon au moins l'une quelconque des revendications précédentes, dans lequel un dispositif de calcul d'un angle de charge momentané du générateur (2) est prévu, dont les signaux peuvent être fournis au dispositif de régulation (11), dans lequel le dispositif de régulation (11) est réalisé afin de conserver ou de renforcer lors de l'atteinte ou du dépassement d'une valeur seuil prédéfinie pour l'angle de charge les mesures de diminution de la puissance du dispositif d'entraînement et si la valeur seuil prédéfinie n'est pas atteinte, de terminer ou de diminuer les mesures de diminution de puissance du dispositif d'entraînement.

7. Groupe électrogène selon au moins l'une quelconque des revendications précédentes, dans lequel le dispositif d'entraînement est réalisé comme moteur à combustion interne (4), de préférence comme moteur à piston alternatif ou turbine à gaz.

8. Procédé de régulation d'un groupe électrogène, dans lequel le groupe électrogène présente au moins un générateur (2) entraînable par un dispositif d'entraînement pour la génération d'énergie électrique, comprenant les étapes suivantes :
- la détection de la présence d'une panne de réseau dans au moins une phase d'un réseau d'alimentation en énergie (1)
- la détermination d'un état de fonctionnement du générateur (2) juste avant ou lors de la détection d'une panne de réseau,
**caractérisé en ce que**
- lors de la détection ou la présence d'une panne de réseau, une puissance du dispositif d'entraînement est régulée en fonction de l'état de fonctionnement du générateur (2) qui se présente juste avant ou lors de la détection d'une panne de réseau,
- une diminution de la puissance du dispositif d'entraînement est entreprise pour un intervalle prédéterminé (Δt),
- l'intervalle prédéterminé (Δt), pour lequel la diminution de la puissance du dispositif d'entraînement est entreprise, est sélectionné en fonction de l'état de fonctionnement du générateur (2) et/ou de la configuration du groupe électrogène juste avant ou lors de la détection de la panne de réseau,
- afin de sélectionner un intervalle d'autant plus long que plus de valeurs mesurées en dernier relatives à l'état de fonctionnement du générateur et/ou à la configuration du générateur avant ou lors de la détection de la panne de réseau divergent de valeurs de consigne prédéfinies, et
- une table à consulter est utilisée, laquelle présente les intervalles prédéterminés pour différents états de fonctionnement possibles du générateur et/ou configurations du groupe électrogène juste avant ou lors de la détection de la panne de réseau.
